(19) **Europäisches Patentamt / European Patent Office / Office européen des brevets**

(11) **EP 4 005 992 A1**

(12) **EUROPEAN PATENT APPLICATION**
published in accordance with Art. 153(4) EPC

(43) Date of publication:
**01.06.2022  Bulletin 2022/22**

(21) Application number: **20859661.9**

(22) Date of filing: **26.08.2020**

(51) International Patent Classification (IPC):
**C03C 21/00** (2006.01)　　**C03C 3/091** (2006.01)
**G01N 3/20** (2006.01)　　**G01N 3/30** (2006.01)
**G01N 3/42** (2006.01)　　**G01N 23/2255** (2018.01)

(52) Cooperative Patent Classification (CPC):
**C03C 3/091; C03C 21/00; G01N 3/20; G01N 3/30; G01N 3/42; G01N 23/2255**

(86) International application number:
**PCT/JP2020/032192**

(87) International publication number:
**WO 2021/044924 (11.03.2021 Gazette 2021/10)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **03.09.2019  JP 2019160670**
　　　　　　**07.11.2019  JP 2019202196**

(71) Applicant: **Koa Glass Co., Ltd.**
**Tokyo 132-0035 (JP)**

(72) Inventors:
• **IDEI Hironari**
　**Tokyo 132-0035 (JP)**
• **IDEI Tatsuhiko**
　**Tokyo 132-0035 (JP)**
• **OCHI Akihiko**
　**Tokyo 132-0035 (JP)**
• **TANAKA Shuhei**
　**Tsukuba-City, Ibaraki  3050046 (JP)**

(74) Representative: **Patentanwälte Bressel und Partner mbB**
**Potsdamer Platz 10**
**10785 Berlin (DE)**

(54) **INORGANIC COMPOSITION AND METHOD FOR PRODUCING INORGANIC COMPOSITION**

(57)　Provided is an inorganic composition containing at least one selected from glass or a non-glass-based ceramic, the inorganic composition having excellent mechanical strength, toughness, and the like and also exhibiting excellent productivity.

　　Disclosed is an inorganic composition containing at least one selected from glass or a non-glass-based ceramic as a component, in which the flexural strength measured by a four-point bending test method based on JIS R 1601 has a value of 300 MPa or greater, the fluorescence intensity at a wavelength 260 to 600 nm as measured by a fluorophotometric analysis method based on JIS K 0120 when the inorganic composition is excited by light at a wavelength having a value within the range of 180 to 250 nm, has a value of 3,000 RFU or less, and the inorganic composition is produced by disposing the inorganic composition at a predetermined place in a heating furnace equipped with a photon irradiation apparatus, heating the inorganic composition to 150°C to 1,000°C, and irradiating the inorganic composition with photons.

Fig. 1A
4-POINT BENDING GLASS STRENGTH (M p a)

**(Cont. next page)**

Fig. 1B

4-POINT BENDING GLASS STRENGTH (M p a)

EXCITATION WAVELENGTH 204 nm

B (SODA LIME GLASS)

A (BOROSILICATE GLASS)

C (CERAMIC)

FLUORESCENCE INTENSITY AT WAVELENGTH OF 510 nm (R F U)

**Description**

TECHNICAL FIELD

The present invention relates to an inorganic composition and a method for producing an inorganic composition thereof.

Particularly, the present invention relates to an inorganic composition (also including completely vitrified glass, a partially vitrified glass composition, or a non-glass-based ceramic other than those; hereinafter, the same) having an excellent mechanical strength, toughness, and the like, and a method for producing an inorganic composition, by which such an inorganic composition is easily and stably obtained.

BACKGROUND ART

Conventionally, silica glass is a high-quality glass composition that includes nearly 100% of silicon dioxide as an inorganic composition and is widely used in the semiconductor field, the optical communication field, and the like.

On the other hand, soda lime glass is a glass composition that includes about 70% of silicon dioxide and includes an alkali as a main component of the residual content, and from the viewpoints of being inexpensive and having excellent transparency and mechanical strength, soda lime glass is most widely used as a glass composition for glass sheets and glass containers.

Furthermore, borosilicate glass is a glass composition that includes about 80% of silicon dioxide and includes boron oxide as a main component of the residual content, and borosilicate glass is known as heat-resistant glass and hard glass and is widely used as glass for physics and chemistry instruments and kitchen utensils.

As these glasses, there is a demand for manufactured products, which further increase mechanical strength, toughness, and the like and enhance bendability, enable inspection of physical properties and the like by simple non-destructive methods, and would suppress the production cost.

For example, as a bendable glass composition, a soda lime glass which is obtained by being immersed in a predetermined molten potassium nitrate salt has been disclosed (see, for example, Patent Document 1).

More specifically, a soda lime glass having a thickness (t) of 0.2 mm or less and a surface compressive stress of greater than 700 MPa has been disclosed.

Furthermore, a thin flexible glass which is coated on the surface with a predetermined material and is chemically reinforced has been disclosed (see, for example, Patent Document 2).

More specifically, soda lime glass and borosilicate glass which are chemically reinforced and are coated so as to form a layer including a predetermined oxide layer and/or a silicon oxide layer, have been disclosed.

On the other hand, a technology related to a silica glass having predetermined characteristics for the purpose of improving the transmission loss of optical fibers or the like has been disclosed (see, for example, Patent Document 3) .

More specifically, it is a silica glass having a silicon dioxide concentration of 99.7% or more, a fictive temperature of 1,000°C or higher, a Rayleigh scattering coefficient of 0065 dB/Km or less, and a pore radius of 0.24 nm or less as measured by a positron annihilation lifetime method.

Furthermore, regarding the treatment conditions for such a silica glass, it is disclosed to the effect that the silica glass is maintained at a temperature of 1200°C or higher and 2,000°C or lower and at a pressure of 30 MPa or higher and then cooled under predetermined conditions.

CITATION LIST

PATENT DOCUMENTS

Patent Document 1: JP 2018-188335 A (Claims and the like)
Patent Document 2: JP 2017-529305 A (Claims and the like)
Patent Document 3: JP 6372011 B2 (Claims and the like)

DISCLOSURE OF THE INVENTION

PROBLEM TO BE SOLVED BY THE INVENTION

However, in the case of a glass plate derived from the soda lime glass disclosed in Patent Document 1, a treatment of immersing a glass plate having a predetermined thickness or less in predetermined molten potassium nitrate salt was needed in order to enhance bendability.

Therefore, not only it was necessary to perform predetermined complicated liquid treatment, cleaning treatment, and the like, but it was also difficult to apply the soda lime glass to glass molded articles having various shapes, including a glass container and the like.

Further, there was a problem that the thickness of the glass that would be applied is 0.2 mm or less, and it is difficult to deal with a glass product having a large area, including relatively thick glass.

Furthermore, in the case of the thin flexible glass disclosed in Patent Document 2, predetermined chemical strengthening and coating were needed, and it was difficult to apply the thin flexible glass to glass molded articles having various shapes.

Also, there was a problem that the thickness of the glass that would be applied is 300 $\mu$m or less, and it is difficult to deal with a glass product having a large area.

In addition, the silica glass having predetermined characteristics as disclosed in Patent Document 3 was intended to improve the optical characteristics of silica glass, and the patent document was not focused on the strength and toughness of common glasses such as soda lime glass and borosilicate glass, in addition to silica glass.

Furthermore, whether silica glass has desired physical properties would be inspected with a non-destructive method by measuring the pore radius using a positron annihilation lifetime method; however, there was a problem that a high-temperature high-pressure treatment at 1200°C or higher and 30 MPa or higher is needed during production.

Thus, the inventors of the present invention thoroughly considered the problems of conventional technologies, and as a result, the inventors found that when at least one selected from glass or a ceramic other than that (non-glass-based ceramic) is incorporated, and when the flexural strength measured according to a four-point bending test method based on JIS R 1601 and the fluorescence intensity at a wavelength in a predetermined range, the fluorescence intensity being measured by a fluorescence intensity analysis method( sometimes called as fluorophotometric analysis method) based on JIS K 0120 at the time of being excited by light having a wavelength value within the range of 180 to 250 nm, are set to be less than or equal to predetermined values, an inorganic composition which has excellent mechanical strength, toughness, and the like under low temperature and normal pressure conditions during production, which enables inspection of physical properties by non-destructive methods, and which exhibits excellent productivity. Thus, the inventors completed the invention.

That is, it is an object of the present invention to provide an inorganic composition having excellent mechanical strength, toughness, and the like and exhibiting high productivity, and a production method capable of producing such an inorganic composition rapidly and easily.

MEANS FOR SOLVING PROBLEM

The inorganic composition of the invention is an inorganic composition containing at least one selected from glass or a non-glass-based ceramic as a blending component, wherein the flexural strength of the inorganic composition measured by a four-point bending test method based on JIS R 1601 is set to a value of 300 MPa or less, and the fluorescence intensity at a wavelength within the range of 260 to 600 nm as measured by a fluorescence intensity analysis method based on JIS K 0120 at the time of being excited by light having a wavelength value within the range of 180 to 250 nm is set to a value of 3,000 RFU (relative fluorescence unit) or less.

That is, according to the inorganic composition of the invention, attention is paid to the flexural strength and the fluorescence intensity at the time of being excited, and it is possible to provide an inorganic composition which, since those properties are controlled to values equal to or less than predetermined values, has excellent mechanical strength and toughness, specifically excellent flexural strength, impact strength, and Vickers hardness, under low-temperature and normal pressure conditions during production, and which, since inspection of physical properties would be conducted by non-destructive methods, exhibits high productivity and is optimal as a blending component for a glass container or the like.

Furthermore, when configuring the inorganic composition of the invention, it is preferable that the pore radius measured by a positron annihilation lifetime method is set to a value of 0.181 nm or less.

It is because by having such a configuration, an inorganic composition having superior mechanical strength and toughness would be obtained.

Furthermore, when configuring the inorganic composition of the invention, it is preferable that the Vickers hardness measured based on JIS Z 2244 is set to a value of 4 Hv or higher.

By having such a configuration, an inorganic composition containing at least one selected from glass or a non-glass-based ceramic, the inorganic composition having excellent strength and toughness compared with conventional inorganic compositions and having no practical problem, would be obtained.

Furthermore, when configuring the inorganic composition of the invention, it is preferable that the impact strength measured by an impact test apparatus is set to a value of 0.8 kJ/m$^2$ or more.

By having such a configuration, an inorganic composition containing glass, a non-glass-based ceramic, or the like, the inorganic composition having excellent strength and toughness compared with conventional inorganic compositions, would be realized.

When configuring the inorganic composition of the invention, it is preferable that the inorganic composition has a flat plate-shaped portion, and the thickness of the portion is set to a value within the range of 0.01 to 20 mm.

By having such a configuration, since the inorganic composition would cover the main thickness of molded articles derived from this inorganic composition, which are used in industry and consumer products, molded articles derived from an inorganic composition containing at least one of glass or a non-glass-based ceramic, the molded articles being various containers that have predetermined thicknesses and are useful for consumer use and plate-shaped objects, would be provided.

Furthermore, another invention of the present invention is a method for producing the above-mentioned inorganic composition of the invention, the method including the following first step to third step (may be referred to as first production method):

first step: a step of disposing the inorganic composition in a predetermined place in a treatment chamber of an ion implantation apparatus performing an ion implantation method;
second step: a step of reducing the internal pressure of the ion implantation apparatus to a value within the range of 0.0001 to 0.017 Pa; and
third step: a step of implanting ions into the inorganic composition.

By carrying out the method as such, the flexural strength and the fluorescence intensity at the time of being excited would be accurately controlled to be smaller, and therefore, the inorganic composition according to the invention would be produced stably and reliably.

Furthermore, still another invention of the present invention is a method for producing an inorganic composition and is a method for producing the above-mentioned inorganic composition of the invention, which includes the following step A and step B (may be referred to as second production method):

step A: a step of disposing the inorganic composition at a predetermined place of a heating furnace equipped with a photon irradiation apparatus; and
step B: a step of heating the inorganic composition to 150°C to 1,000°C, and at the same time, implanting photons by irradiating the inorganic composition with photons.

By carrying out the method as such, the flexural strength and fluorescence intensity at the time of being excited would be easily controlled to be small as compared with the case where each of the above-described steps is not carried out, and therefore, the inorganic composition according to the invention would be produced stably and inexpensively.

BRIEF DESCRIPTION OF DRAWINGS

Fig. 1A and Fig. 1B are diagrams provided to explain the relationship between the fluorescence intensity and the flexural strength of the inorganic composition;
Fig. 2A and Fig. 2B are diagrams provided to explain the relationship between the fluorescence intensity and the impact resistance strength of the inorganic composition;
Fig. 3A and Fig. 3B are diagrams provided to explain the relationship between the pore radius, the flexural strength, and the impact resistance strength, respectively, of the inorganic composition;
Fig. 4 is a diagram provided to explain a four-point bending test for the inorganic composition;
Fig. 5A and Fig. 5B are diagrams provided to explain the indentations and the like at a load of 4.9 N and a load of 9.8 N at the time of subjecting the inorganic composition of the invention to a Vickers hardness test, and Fig. 5C and Fig. 5D are diagrams provided to explain the indentations and the like at a load of 1.9 N and a load of 4.9 N at the time of subjecting the inorganic compositions of Comparative Examples to a Vickers hardness test;
Fig. 6A is a diagram provided to explain the sample and the impact application site used for an impact test by means of an impact tester, and Fig. 6B is a diagram provided to explain the state of impact dent after a repeated impact test;
Fig. 7 is a diagram provided to explain an ion implantation apparatus for performing a predetermined treatment (ion implantation treatment or the like) of a second embodiment (first production method) of the invention;
Fig. 8A and Fig. 8B are diagrams provided to explain a treatment apparatus for performing a predetermined treatment (a heating and photon implantation treatment or the like) of a third embodiment (second production method) of the invention; and
Fig. 9 is a diagram provided to explain changes in the fluorescence intensity of the inorganic composition depending on the treatment conditions in the third embodiment (second production method) of the invention.

MODES FOR CARRYING OUT THE INVENTION

Hereinafter, embodiments of the present invention will be specifically described. Incidentally, each diagram used for the description is merely schematically shown to the extent that these inventions would be understood. Furthermore, in each diagram used for the description, the same constituent components will be assigned with the same reference numeral, and there will be occasions in which the description therefor is omitted. Furthermore, the apparatus used, the shape, the dimension, the material, and the like described in the following description are merely suitable examples within the scope of the present invention. Therefore, the present invention is not intended to be limited only to the following embodiments without any particular reason.

[First embodiment]

A first embodiment of the present invention is an inorganic composition obtained by performing a strengthening treatment, the inorganic composition containing at least one selected from glass or a non-glass-based ceramic, wherein the flexural strength measured by a four-point bending test method based on JIS R 1601 is set to a value of 300 MPa or less, and the fluorescence intensity at a wavelength within the range of 260 to 600 nm as obtained by a fluorescence intensity analysis method based on JIS K 0120 at the time of being excited by light having a wavelength value within the range of 180 to 250 nm is set to a value of 3,000 RFU (relative fluorescence unit) or less.

1. Inorganic composition

The target inorganic composition contains at least one selected from glass or a ceramic other than that (non-glass-based ceramic) as a blending component.

The type of the glass used as the blending component of the inorganic composition is not particularly limited, and examples thereof include soda lime glass, borosilicate glass, lead glass, phosphate glass, and silica glass.

However, from the viewpoint of being relatively inexpensive, having excellent transparency and the like, and being easily handleable, it is preferable that the inorganic composition contains soda lime glass and borosilicate glass, or any one of the glass compositions.

Then, the inorganic composition as a target of a strengthening treatment is typically a broad concept including not only a completely vitrified glass and a non-glass-based ceramic other than that, but also a partially vitrified glass or the like.

Here, soda lime glass includes all of those well-known ones recognized as soda lime glass. Therefore, typically, when the total amount on the basis of percent (%) by weight is taken as 100% by weight, soda lime glass has the following blend composition:

$SiO_2$: 65% to 85% by weight
$B_2O_3$: 0.01% to 5% by weight
$Al_2O_3$: 0.01% to 5% by weight
MgO: 0.01% to 20% by weight
CaO: 0.01% to 20% by weight
$Na_2O$: 5% to 20% by weight
$K_2O$: 5% to 20% by weight

To speak further, a more specific and suitable example of soda lime glass may be the glass composition of Glass Code No. 0081 of Corning, Inc. ($SiO_2$: 73% by weight, $Al_2O_3$: 1% by weight, MgO: 4% by weight, CaO: 5% by weight, $Na_2O$: 17% by weight).

In addition, products including a predetermined amount (for example, 0.01% to 5% by weight) of at least one of $B_2O_3$, ZnO, $P_2O_5$, $P_2O_5$, $SO_2$, and the like, and a coloring component such as cobalt oxide or copper oxide, as the glass components of soda lime glass are also preferable.

Furthermore, borosilicate glass includes all of those well-known ones recognized as borosilicate glass. Therefore, typically, when the total amount on the basis of percent (%) by weight is taken as 100% by weight, borosilicate glass has the following blend composition:

$SiO_2$: 80% to 85% by weight
$B_2O_3$: 10% to 15% by weight
$Al_2O_3$: 0.01% to 5% by weight

Na$_2$O: 5% to 20% by weight
K$_2$O: 5% to 20% by weight

To speak further, a more specific and suitable example of borosilicate glass may be the glass composition of Glass Code No. 7740 of Corning, Inc. (SiO$_2$: 80.9% by weight, B$_2$O$_3$: 12.7% by weight, Al$_2$O$_3$: 2.3% by weight, Na$_2$O: 4% by weight, K$_2$O: 0.04% by weight, Fe$_2$O$_3$: 0.03% by weight) .

In addition, products including a predetermined amount (for example, 0.01% to 5% by weight) of at least one of ZnO, P$_2$O$_5$, P$_2$O$_5$, SO$_2$, and the like, and a coloring component such as cobalt oxide or copper oxide, as the glass components of soda lime glass are also preferable.

In addition, it is also preferable that predetermined amounts, for example, within the range of 0.1% to 20% by weight when the total amount is taken as 100% by weight, of lead glass, phosphate glass, aluminosilicate glass, and the like are incorporated into soda lime glass and borosilicate glass.

Furthermore, it is preferable to use colorless transparent glass as the glass constituting a glass container; however, it is also preferable to use colored transparent glass and colored translucent glass.

When colorless transparent glass is used, the color of the content contained in the glass container would be sufficiently recognized from the outside, and the color of the content would be clearly recognized by utilizing internal reflection of light.

On the other hand, when colored transparent glass and colored translucent glass are used, the content would be visually recognized by utilizing internal reflection of light, and a decorative effect would be exhibited.

Furthermore, a ceramic includes all of those well-known ones recognized as non-glass-based ceramics. Therefore, for example, when the total amount on the basis of percent (%) by weight is taken as 100% by weight, a ceramic has the following blend composition:

SiO$_2$: 60% to 85% by weight
Al$_2$O$_3$: 8% to 25% by weight
Fe$_2$O$_3$: 0.01% to 15% by weight
K$_2$O: 0.05% to 20% by weight
Na$_2$O: 1% to 15% by weight
TiO$_2$: 0.001% to 0.1% by weight
MgO: 0.001% to 0.1% by weight
CaO: 0.001% to 5% by weight

2. Fluorescence intensity

The fluorescence intensity of the inorganic composition according to the invention would be measured by a fluorescence intensity analysis method based on JIS K 0120.

The fluorescence intensity analysis method is a technique of producing, for example, a plate-shaped object having a predetermined size (for example, 5 mm in width × 10 mm in height × 1 mm in thickness) as a sample, irradiating this sample with excitation light, and measuring the fluorescence intensity at a predetermined wavelength using a spectrophotometer.

For the measurement of the fluorescence intensity, the wavelength of the excitation light to be irradiated is not particularly limited; however, from the viewpoint that the measurement of the fluorescence intensity is facilitated, it is preferable that the wavelength has, for example, a value within the range of 180 to 250 nm.

Here, with regard to the inorganic composition of the first embodiment, the fluorescence intensity at a wavelength within the range of 260 to 600 nm based on JIS K 0120 at the time of being excited by light at a wavelength having a value within the range of 180 to 250 nm is set to a value of 3,000 RFU (relative fluorescence unit) or less.

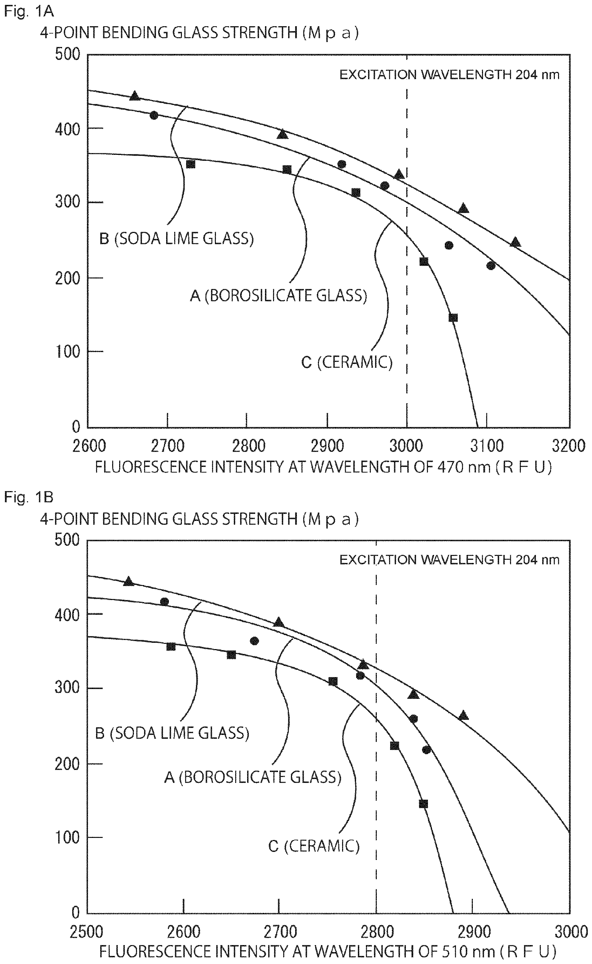

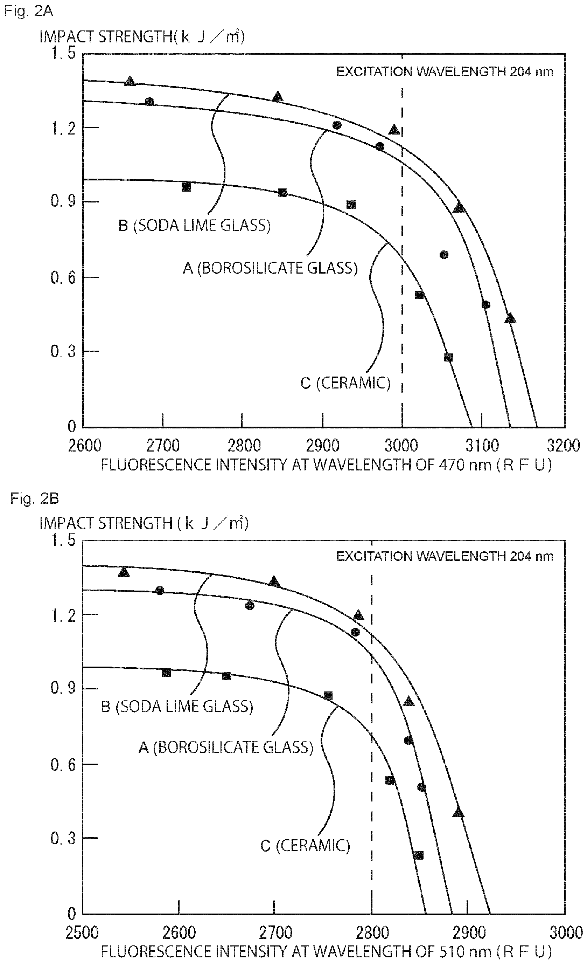

The reason for this is that when the fluorescence intensity is controlled to such a value, there is obtained an inorganic composition having excellent flexural strength as the mechanical strength and at the same time, also having excellent impact resistance, which is measured based on JIS K 7111-1, as toughness, which is considered as a contradictory characteristic of flexural strength, as shown in the characteristic curve A (corresponding to borosilicate glass), characteristic curve B (corresponding to soda lime glass), and characteristic curve C (corresponding to a ceramic) in FIG. 1A to Fig. 1B and Fig. 2A to Fig. 2B.

Furthermore, it is because in the above-mentioned fluorescence intensity analysis method, since measured data of the fluorescence intensity would be obtained in several seconds from the irradiation with excitation light, inspection during production is easily achieved, and it is possible to obtain an inorganic composition with excellent productivity.

However, when the fluorescence intensity of such an inorganic composition becomes excessively small, the product yield during production and the types of the components that would be used may be excessively limited.

Therefore, it is more preferable to set such fluorescence intensity to a value within the range of 300 to 2900 RFU, and even more preferably to a value within the range of 500 to 2800 RFU.

Next, the relationship between the fluorescence intensity (RFU) and the flexural strength (MPa) obtainable by a four-point bending test method for the inorganic composition will be described in more detail with reference to Fig. 1A and Fig. 1B.

That is, the axis of abscissa of Fig. 1A represents the fluorescence intensity (RFU) at a wavelength of 470 nm based on JIS K 0120 when the inorganic composition is excited by light having a wavelength of 204 nm, and the axis of ordinate represents the flexural strength (MPa) obtainable by a four-point bending test method.

Furthermore, the axis of abscissa of Fig. 1B represents the fluorescence intensity (RFU) at a wavelength of 510 nm based on JIS K 0120 when the inorganic composition is excited by light having a wavelength of 204 nm, and the axis of ordinate represents the flexural strength (MPa) obtainable by a four-point bending test method.

The characteristic curve A belongs to an inorganic composition as borosilicate glass, the characteristic curve B belongs to an inorganic composition of soda lime glass, and the characteristic curve C belongs to an inorganic composition as a ceramic.

As understood respectively from the changes in these characteristic curves A, B, and C, when the fluorescence intensity for an inorganic composition has a value of above 3,000 RFU, there is seen a tendency that the value of flexural strength is sharply decreased.

Therefore, it is understood, from the changes in the characteristic curves A, B, and C, that by controlling the fluorescence intensity (RFU) at a wavelength within the range of 260 to 600 nm based on JIS K 0120 when the inorganic composition is excited by light having a wavelength value within the range of 180 to 250 nm, to a value equal to or less than a predetermined value or the like, even soda lime glass or borosilicate glass would each maintain a high value of flexural strength, and excellent mechanical strength is obtained.

Next, the relationship between the fluorescence intensity (RFU) and the impact strength measured based on JIS K 7111-1 for an inorganic composition will be described in more detail with reference to Fig. 2A and Fig. 2B.

That is, the axis of abscissa of Fig. 2A represents the fluorescence intensity (RFU) at a wavelength of 470 nm based on JIS K 0120 when the inorganic composition is excited by light having a wavelength of 204 nm, and the axis of ordinate represents the impact strength.

Furthermore, the axis of abscissa of Fig. 2B represents the fluorescence intensity (RFU) at a wavelength of 510 nm based on JIS K 0120 when the inorganic composition is excited by light having a wavelength of 204 nm, and the axis of ordinate represents the impact strength.

The characteristic curve A belongs to an inorganic composition as borosilicate glass, the characteristic curve B belongs to an inorganic composition as soda lime glass, and the characteristic curve C belongs to an inorganic composition as a ceramic.

As it is understood from each of the changes in these characteristic curves A, B, and C, when the fluorescence intensity for the inorganic composition has a value of above 3,000 RFU, the proportions at which the mechanical strength, toughness, and the like are decreased become larger, and for example, there is seen a tendency that the impact strength measured based on JIS K 7111-1 is decreased to about 0.3 kJ/m$^2$.

Therefore, from the changes in the characteristic curves A, B, and C, it is understood that by controlling the fluorescence intensity (RFU) at a wavelength within the range of 260 to 600 nm based on JIS K 0120 when the inorganic composition is excited by light at a wavelength having a value within the range of 180 to 250 nm, to be less than or equal to a predetermined value, the impact strength measured based on JIS K 7111-1 would be maintained high and excellent impact resistance is obtained regardless of whether the glass is soda lime glass or borosilicate glass.

3. Pore radius

Furthermore, with regard to the inorganic composition of the first embodiment, it is preferable that the pore radius measured by a positron annihilation lifetime method is set to 0.181 nm or less.

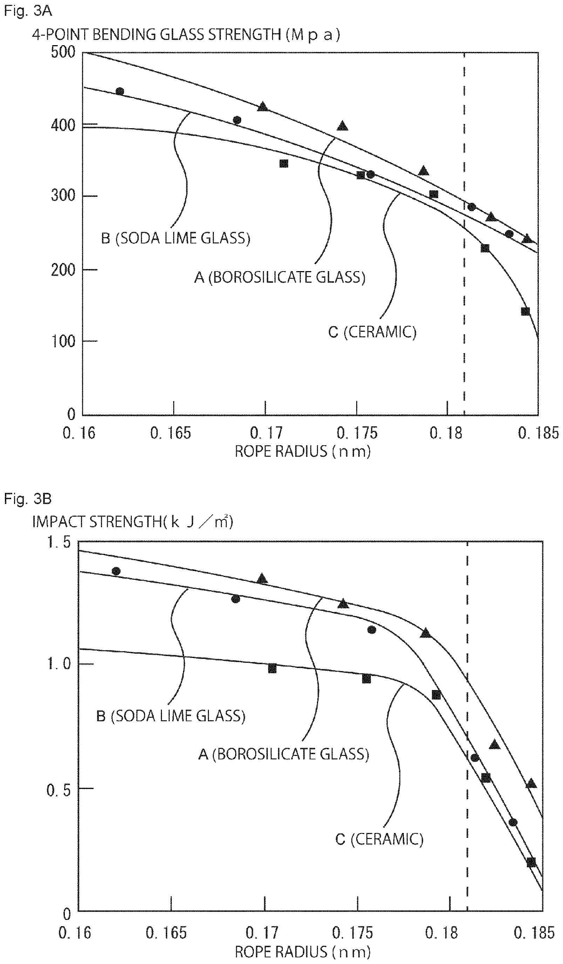

The reason for this is that when the pore radius is controlled to such a value, there is obtained an inorganic composition having superior flexural strength as the mechanical strength and also having superior impact resistance, which is measured based on JIS K 7111-1, as toughness, which is considered as a contradictory characteristic of flexural strength, as shown in the characteristic curve A (corresponding to borosilicate glass), characteristic curve B (corresponding to soda lime glass), and characteristic curve C (corresponding to a ceramic) in FIG. 3A and Fig. 3B.

However, when the pore radius of such an inorganic composition becomes excessively small, the product yield during production and the types of the components that would be used may be excessively limited.

Therefore, it is more preferable to set such pore radius to a value within the range of 0.15 to 0.178 nm, and even more preferably to a value within the range of 0.16 to 0.175 nm.

Next, the relationship between the pore radius (nm) and the flexural strength (MPa) obtained by a four-point bending test method for an inorganic composition will be described in more detail with reference to Fig. 3A.

That is, the axis of abscissa of Fig. 3A represents the pore radius (nm) for the inorganic composition, and the axis of ordinate represents the flexural strength (MPa) obtainable by a four-point bending test method.

The characteristic curve A belongs to an inorganic composition as borosilicate glass, the characteristic curve B belongs to an inorganic composition as soda lime glass, and the characteristic curve C belongs to an inorganic composition as a ceramic.

As understood respectively from the changes in these characteristic curves A, B, and C, when the pore radius for an inorganic composition has a value of above 0.181 nm, there is seen a tendency that the value of flexural strength is decreased.

Therefore, it is understood, from the changes in the characteristic curves A, B, and C, that by controlling the pore radius (nm) for the inorganic composition to a value equal to or less than a predetermined value or the like, a high value of flexural strength would be maintained, and excellent mechanical strength is obtained regardless of whether the glass is soda lime glass, borosilicate glass, or a ceramic.

Next, the relationship between the pore radius (nm) and the impact strength (MPa) measured based on JIS K 7111-1 for an inorganic composition will be described in more detail with reference to Fig. 3B.

That is, the axis of abscissa of Fig. 3B represents the pore radius (nm) for the inorganic composition, and the axis of ordinate represents the impact strength.

The characteristic curve A belongs to an inorganic composition as borosilicate glass, the characteristic curve B belongs to an inorganic composition as soda lime glass, and the characteristic curve C belongs to an inorganic composition as a ceramic.

As understood respectively from the changes in these characteristic curves A, B, and C, when the pore radius for an inorganic composition has a value of above 0.181 nm, the proportions at which the mechanical strength, toughness, and the like are decreased become larger, and for example, there is seen a tendency that the impact strength measured based on JIS K 7111-1 is decreased to about 0.3 kJ/m$^2$.

Therefore, from the changes in the characteristic curves A, B, and C, it is understood that by controlling the pore radius (nm) for the inorganic composition to be less than or equal to a predetermined value, the impact strength measured based on JIS K 7111-1 would be maintained high and excellent impact resistance is obtained regardless of whether the glass is soda lime glass, borosilicate glass, or a ceramic.

Incidentally, the positron annihilation lifetime method is a technique of determining the size of pores by utilizing the fact that the time taken from bombarding of positrons into a sample of an inorganic composition or the like to annihilation is annihilated in a time period corresponding to the size of pores.

For the measurement of such a positron annihilation lifetime, the time taken from the signal generated when the radiation source collapses to the signal generated when positrons are annihilated is measured. As a result, three components represented by $\tau1$, $\tau2$, and $\tau3$ would be obtained by using the obtained profile of the positron lifetime.

Generally, $\tau_3$ is a value reflecting the pore radius and would be determined by applying the value to the following Formula (1).

Incidentally, in such Formula (1), $\pi$ represents the ratio of the circumference of a circle to its diameter; R represents the pore radius; and $R_0 = R + \delta$ ($\delta$ represents the value representing the spread of electrons, which is 0.1650 nm).

[Formula 1]

$$\frac{1}{\tau_3} = 2 \times \left[ 1 - \frac{R}{R_0} + \frac{1}{2\pi} sin\left(\frac{2\pi R}{R_0}\right) \right] \qquad (1)$$

4. Various molded articles (also including use applications)

(1) Plate-shaped object

It is preferable that an inorganic molded article (including a glass molded article and a ceramic molded article other than the glass molded article; hereinafter, simply referred to as glass molded article) derived from the inorganic composition of the first embodiment typically has a plate-like shape.

The reason for this is that when such a molded article is produced, excellent mechanical strength that is not likely to crack even when the surface is subjected to impact, and toughness that is considered as a characteristic contradictory to the mechanical strength, would be effectively obtained.

Therefore, as an example of the use application of such a plate-shaped object, the plate-shaped object would be effectively utilized for glass surfaces of mobile telephones (smartphones), tablets, watches; windowpanes of buildings and automobiles; tiles on floor faces; and the like.

(2) Container shape

Furthermore, it is also preferable that the inorganic composition of the first embodiment is molded into a glass container, or a container shape derived from a ceramic other than glass.

The reason for this is that when a glass composition is produced into a shape of a glass container, or a container shape derived from a ceramic composition other than glass, the contents contained in the glass container or the like would be mechanically protected, and at the same time, a decrease in visibility at the time of viewing through the glass container or the like would be effectively prevented.

Therefore, as an example of the use application of such a glass container or the like, the inorganic composition would be widely utilized for glass bottles and cups for putting in and storing beverages, foods, cosmetics, and the like; glass cases for placing and displaying decorations, jewelry, and the like; rice bowls, cups, jars, boxes, and the like as pottery; and the like.

That is, the inorganic composition would be widely applied as containers having the predetermined shapes of various glass containers and ceramic containers other than those, which are conventionally considered to break easily depending on handling.

(3) Wire-shaped object

Furthermore, the inorganic composition of the first embodiment would be produced into a wire-shaped object.

When the inorganic composition is molded into a wire-shaped object, even when a filament is wound or the shape is frequently changed, the shape would be maintained without being cut or broken.

Therefore, as an example of the use application of such a wire-shaped object, the inorganic composition would be utilized for construction materials such as heat insulating materials, and fiber-reinforced plastics obtained by compositizing an epoxy resin, a phenol resin, and the like.

Incidentally, when a reinforced inorganic composition is produced into a wire-shaped object, for example, the fiber diameter of the wire-shaped object would be adjusted to 1/20 or less as compared with an unreinforced inorganic composition.

(4) Irregular-shaped object (coated object)

Furthermore, another aspect of the inorganic composition of the first embodiment would be a coated object, although it is regarded as a kind of irregular-shaped object.

That is, when an inorganic composition is produced into a coated object, which is formed by laminating on a base material or the like, a surface of a metal, a resin, or the like would be brought into a state of being coated with a predetermined inorganic composition.

Therefore, a reinforced irregular-shaped object would be produced into, for example, a flat plate-shaped coated object derived from an inorganic composition and then would be subjected to predetermined bending processing or the like.

To be more specific, even when the base material or the like has a curved surface in advance, the base material or the like would be coated with the inorganic composition of the first embodiment.

Therefore, as an example of such a coated object, the inorganic composition would be suitably utilized for the protection and the like of a solar panel having a curved surface, a gas barrier layer having a curved surface, and a vehicle body of an automobile having a curved surface.

(5) Mixture 1 (partially reinforced inorganic composition)

Furthermore, still another aspect of the inorganic composition of the first embodiment would be a partially reinforced inorganic composition, although it is regarded as a kind of mixture.

That is, when a mixture of a reinforced inorganic composition and a non-reinforced inorganic composition, that is, a partially reinforced inorganic composition, is produced as the inorganic composition, a portion which requires high flexural strength and the like and a portion which does not require it relatively much would be integrated, while the mixture would be used with separated functions.

Therefore, as such a partially reinforced inorganic composition, the inorganic composition would be utilized for glass containers and ceramic containers other than those, with a body having a particularly reinforced neck; and glass electrodes, glass protective covers, and the like for smartphones, wearable equipment, and the like.

Incidentally, a partially reinforced inorganic composition would be easily formed by, for example, partially implanting photons through a predetermined mask in the third embodiment (second production method) that will be described below.

(6) Mixture 2 (mixture of resin material or the like and reinforced inorganic composition)

Furthermore, it is also preferable that the inorganic composition is in the form of a mixture of the inorganic composition of the first embodiment and a resin material or the like.

That is, it is preferable that the inorganic composition is formed into a mixture by mixing a predetermined amount of a reinforced inorganic composition with a resin material, a ceramic material other than a reinforced inorganic composition, a metal material, or the like.

For example, conventional glass fiber-reinforced resins have shown a problem that when glass fibers are incorporated, the glass fibers are easily broken, and desired lengths may not be obtained (hereinafter, may be referred to as breakage problem); however, such a breakage problem at the time of incorporation would also be solved by using glass fibers derived from the inorganic composition of the first embodiment, or ceramic fibers other than the glass fibers.

Therefore, even when the blending amount of glass fibers derived from the inorganic composition of the first embodiment is decreased as compared with conventional glass fiber-reinforced resins, excellent mechanical strength, toughness, and the like as a novel glass fiber-reinforced resin would be obtained.

5. Various forms and characteristics

(1) Thickness

Furthermore, it is also preferable that the inorganic composition of the first embodiment is produced to have a flat plate-shaped part, and the thickness of the flat plate-shaped part is set to a value within the range of 0.01 to 20 mm.

The reason for this is that by setting the thickness to be within the above-described range, when a molded article derived from the inorganic composition is produced, the molded article would have sufficient rigidity and would also be made thin and lightweight.

Therefore, it is more preferable that such a thickness is set to a value within the range of 0.1 to 10 mm, and even more preferably to a value within the range of 0.3 to 7 mm.

(2) Flexural strength

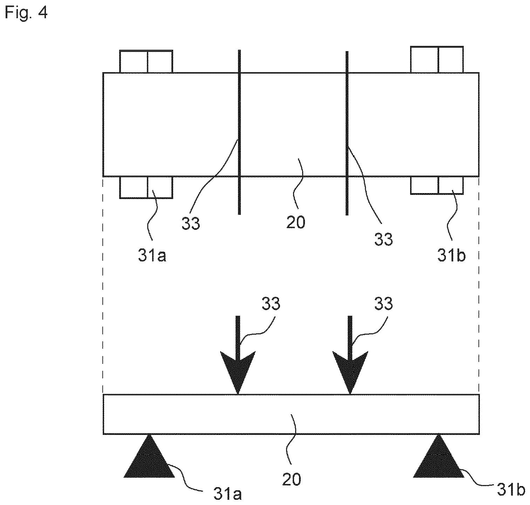

Furthermore, with regard to the inorganic composition of the first embodiment, the flexural strength measured by a four-point bending test method as shown in Fig. 4 (hereinafter, may be simply referred to as flexural strength) based on JIS R 1601 is set to a value of 300 MPa or greater.

The reason for this is that by setting such flexural strength to a predetermined value, even when a molded article is bent, deformed, or the like, the molded article would be made difficult to break.

However, when such flexural strength becomes excessively high, the product yield during production and the types of the components that would be used may be excessively limited.

Therefore, it is more preferable that such flexural strength is set to a value within the range of 350 to 800 MPa, and even more preferably to a value within the range of 400 to 600 MPa.

Incidentally, the four-point bending test method would be measured based on JIS R 1601; however, more specifically, measurement would be made according to the description of Example 1 that will be described below.

(3) Impact strength

Furthermore, with regard to the inorganic composition of the first embodiment, it is preferable that the impact strength measured by an impact test apparatus as a guide for satisfactory toughness is set to a value of 0.8 kJ/m$^2$ or more.

The reason for this is that when the impact strength is set to be equal to or more than a predetermined value, an inorganic composition having excellent impact resistance would be reliably formed.

However, when such impact strength becomes excessively high, the product yield during production and the kinds of the components that would be used may be excessively limited.

Therefore, it is more preferable that the impact strength is set to a value within the range of 1.0 to 2.0 kJ/m$^2$, and even more preferably to a value within the range of 1.1 to 1.8 kJ/m$^2$.

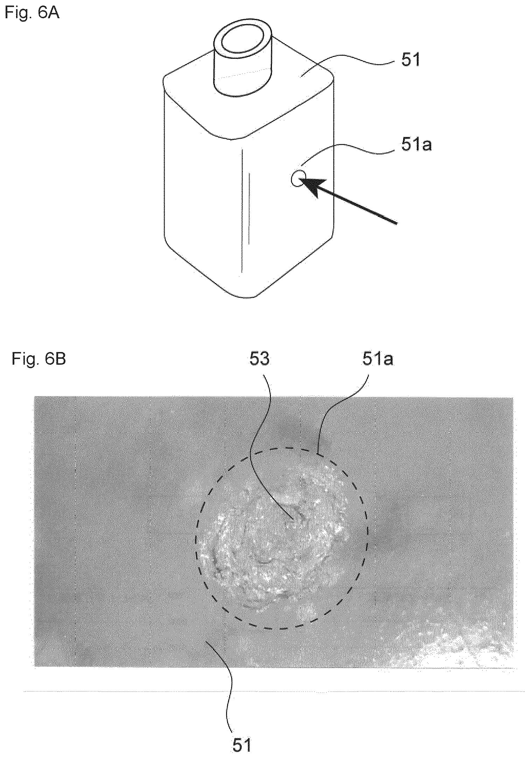

Here, an example of a sample and an impact application site, with which impact strength measurement is performed using an impact test apparatus (impact tester, manufactured by AGR International, Inc.), are shown in Fig. 6A.

Furthermore, Fig. 6B shows an example of impact dent after a repeated impact test using an impact test apparatus (impact tester, manufactured by AGR International, Inc.).

That is, it is understood that cracks that are likely to occur from these impact dents as starting points are not generated, and excellent impact resistance is obtained.

Incidentally, as the impact test apparatus, not only an impact tester (manufactured by AGR International, Inc.)

but also an Izod impact test apparatus based on the standards of JIS K 7110 and the Charpy impact test apparatus based on the standards of JIS K 7110-1 would be suitably used.

(4) Vickers hardness

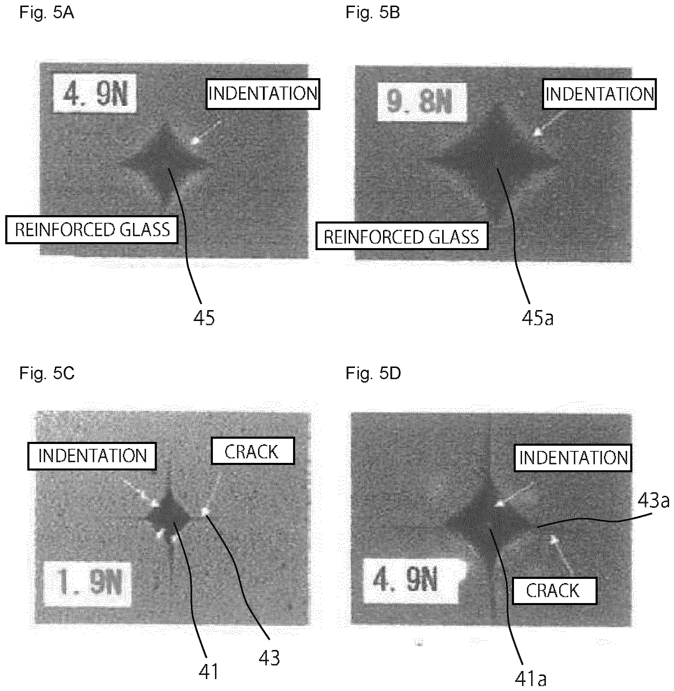

Furthermore, with regard to the inorganic composition (including a molded article) of the first embodiment, it is preferable that the Vickers hardness measured based on JIS Z 2244 is set to a value of 4 Hv or greater.
The reason for this is that when the Vickers hardness is set to the above-described value, an inorganic composition having excellent scratch resistance would be obtained.
However, when such Vickers hardness becomes excessively high, the product yield during production and the types of the components that would be used may be limited.
Therefore, it is more preferable that such Vickers hardness is set to a value within the range of 6 to 12 Hv, and even more preferably to a value within the range of 8 to 10 Hv.
Furthermore, as shown in Fig. 5A and Fig. 5B, it is preferable that cracks are not generated from the vicinity of indentations obtained in the Vickers hardness test.
The reason for this is that as shown in Fig. 5C and Fig. 5D, for an inorganic composition having cracks generated in the Vickers hardness test, as scratches are produced in some part of the inorganic composition, the overall impact resistance of the molded article is weakened, and the characteristics of the above-described bending test and impact strength area extremely likely to deteriorate.
Incidentally, whether the toughness of the inorganic composition is good or bad would be determined based on the presence or absence of such cracks and the length of the cracks (for example, 1 mm or less).

(5) Optical characteristics (light transmittance)

Furthermore, particularly with regard to the optical characteristics in a case where the inorganic composition of the first embodiment contains a glass composition, it is preferable that the light transmittance (visible light) for a plate thickness of 3 mm is set to a value of 75% or higher.
The reason for this is that a molded article having excellent transparency, visibility, and the like would be obtained even when the inorganic composition is produced into a predetermined molded article, and even when the inorganic composition is used in the same way as a generally used untreated glass plate or an untreated glass container.
However, when such a light transmittance becomes excessively high, the product yield during production and the types of the components that would be used may be excessively limited.
Therefore, it is more preferable that such a light transmittance is set to a value within the range of 80% to 99%, and even more preferably to a value within the range of 85% to 98%.
Incidentally, the light transmittance (visible light) would be measured according to the description of Example 1 that will be described below.

(6) Thermomechanical characteristics (softening point)

Furthermore, with regard to the inorganic composition of the first embodiment, it is preferable that the softening point as a thermomechanical characteristic particularly in the case where the inorganic composition contains a glass composition is set to a value of 1,000°C or lower.
The reason for this is that when a predetermined softening point is adopted, the inorganic composition would be easily softened when heated, the inorganic composition would be molded into a predetermined shape, and at the same time, a heat treatment would be easily carried out after molding.
However, when such a softening point becomes excessively high, the product yield during production and the types of the components that would be used may be excessively limited.
Therefore, it is more preferable that such a softening point is set to a value within the range of 550°C to 950°C, and even more preferably to a value within the range of 600°C to 900°C.
Incidentally, the softening point of such an inorganic composition would be measured according to JIS R 3103-1:2001.

[Second embodiment]

A second embodiment of the present invention is a method for producing the inorganic composition of the first embodiment and is a production method for an inorganic composition, which includes the following first step to third step (first production method):

first step: a step of disposing the inorganic composition at a predetermined place in a treatment chamber of an ion implantation apparatus performing an ion implantation method;

second step: a step of reducing the internal pressure of the ion implantation apparatus to a value within the range of 0.0001 to 0.017 Pa; and

third step: a step of implanting ions into the inorganic composition.

1. First step

The first step is a step of preparing an ion implantation apparatus that performs an ion implantation method and disposing an inorganic composition at a predetermined place in a treatment chamber (vacuum chamber) of the apparatus.

More specifically, when ions are implanted, any known ion implantation apparatuses would all be used.

That is, Since the fluorescence intensity measured by a fluorescence intensity analysis method would be controlled stably and rapidly to a desired range as compared with the case of not carrying out each of the above-described steps, the inorganic composition of the first embodiment would be easily and reliably produced.

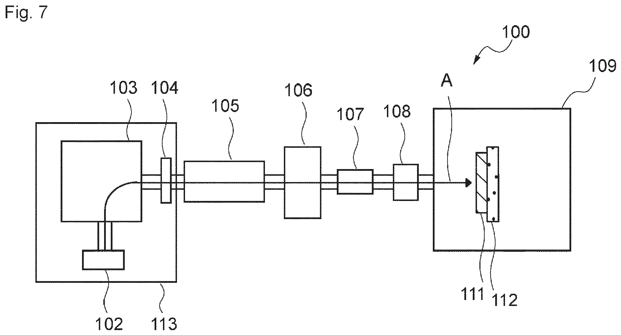

Here, the outline of a typical ion implantation apparatus will be explained by taking the ion implantation apparatus 100 shown in Fig. 7 as an example.

That is, such an ion implantation apparatus 100 basically includes a vacuum chamber 109, a high-voltage unit 113; an acceleration tube 105; a lens 107; and a scanner 108, and the high-voltage unit 113 includes at least an ion source 102 and a mass analyzer 103 in the inside.

The vacuum chamber 109 is a container for disposing an inorganic composition 111 as an object to be treated (may be a raw material glass composition) on a base material 112 at a predetermined position inside the vacuum chamber, and for performing ion implantation.

In addition, this vacuum chamber 109 includes an exhaust hole (not shown in the diagram) for exhausting the internal air or the like.

Furthermore, the high-voltage unit 113 is a device that screens a plurality of kinds of ions extracted by an electric field of an extraction electrode (not shown in the diagram) into predetermined ion species by means of a mass analyzer 103 and an analysis slit 104.

Accordingly, the ion source 102 is provided with a high-voltage generating device and the like for ionizing predetermined elements.

Therefore, according to an ion implantation apparatus 100 configured as such, predetermined ions would be extracted from the ion source 102 by driving the high-voltage unit 113.

Next, as indicated by arrow A, the predetermined ions that have been screened by the mass analyzer 103 and the analysis slit 104 are accelerated in the acceleration tube 105.

Furthermore, the accelerated ions are converged by the lens 107, scanned by the scanner 108, and then irradiated on the inorganic composition 111, which is an object to be treated.

Therefore, a predetermined ion species (nitrogen ions or the like) is induced from the ion source 102 by driving the high-voltage unit 113 as such, that ion species is implanted on the surface and the inner part of the inorganic composition 111, and the fluorescence intensity measured by a fluorescence intensity analysis method would be adjusted to a predetermined range.

Incidentally, although not shown in the diagram, with regard to the implantation apparatus for continuously implanting plasma ions, it is preferable that the inorganic composition 111 and the base material 112 are sequentially subjected to ion implantation by rotationally driving the inorganic composition 111 and the base material 112 using a motor or the like.

2. Second step

The second step is a step of adjusting the internal pressure of the ion implantation apparatus (may be referred to as ion implantation pressure) to a predetermined vacuum pressure.

More specifically, the second step is a step of reducing the pressure in a treatment chamber (vacuum chamber) of such an ion implantation apparatus to a value within the range of 0.0001 to 0.017 Pa by utilizing a vacuum pump such as a cryopump.

Here, it is because when the pressure in the treatment chamber of the ion implantation apparatus has a value of below 0.0001 Pa, an excessively long time may be taken to bring such a vacuum state, and it may be necessary to utilize a special vacuum pump, or it may be difficult to maintain a predetermined pressure.

On the other hand, it is because when the pressure in the treatment chamber of the ion implantation apparatus has a value of above 0.017 Pa, electron detachment due to collision with gas particles is likely to occur, and furthermore, adjustment of the fluorescence intensity measured by a fluorescence intensity analysis method may be difficult.

Therefore, in the second step, it is more preferable that the pressure in the treatment chamber (vacuum chamber) of the ion implantation apparatus is set to a value within the range of 0.0005 to 0.012 Pa, and even more preferably to a value within the range of 0.001 to 0.008 Pa.

3. Third step

The third step is a step of implanting ions into the inorganic composition under predetermined conditions.
Here, the ion species that is introduced into the vacuum chamber and is further implanted into the inorganic composition is not particularly limited; however, the ion species may be at least one selected from ions of noble gases such as argon, helium, neon, krypton, and xenon; ions of fluorocarbon, hydrogen, nitrogen, oxygen, carbon dioxide, chlorine, fluorine, sulfur, and the like; ions of alkane-based gases such as methane, ethane, propane, butane, pentane, and hexane; ions of alkene-based gases such as ethylene, propylene, butene, and pentene; ions of alkadiene-based gases such as pentadiene and butadiene; ions of alkyne-based gases such as acetylene and methylacetylene; ions of aromatic hydrocarbon-based gases such as benzene, toluene, xylene, indene, naphthalene, and phenanthrene; ions of cycloalkane-based gases such as cyclopropane and cyclohexane; ions of cycloalkene-based gases such as cyclopentene and cyclohexene; and ions of electrically conductive metals such as gold, silver, copper, platinum, nickel, palladium, chromium, titanium, molybdenum, niobium, tantalum, tungsten, and aluminum.
Among these ion species, from the viewpoint that ion implantation into the inorganic composition would be more conveniently carried out, and that the adjustment of the fluorescence intensity is easy regardless of whether the thickness is relatively thick or thin, it is even more preferable to implant at least one kind of ions selected from the group consisting of hydrogen, nitrogen, oxygen, argon, helium, neon, xenon, and krypton.
Furthermore, it is preferable that the applied voltage at the time of implanting ions is set to a value within the range of 10 kV to 200 kV.
The reason for this is that when ion implantation is performed at such an applied voltage that is a voltage of below 10 kV, the amount of ion implantation (dose amount) may be insufficient.
On the other hand, it is because when ion implantation is performed at an applied voltage that is a voltage of above 200 kV, the inorganic composition may be electrically charged during ion implantation, and inconvenience such as coloration may occur.
Therefore, it is more preferable that the applied voltage at the time of implanting ions is set to a value within the range of 12 kV to 150 kV, and even more preferably to a value within the range of 15 kV to 100 kV.

4. Other steps

(1) Molding step

The molding step is a step of producing a molded article each having a predetermined shape, which is derived from the inorganic composition before carrying out the first step or the inorganic composition obtained after carrying out the third step.
Such a molding step is an optional step of producing the inorganic composition before carrying out the first step or the inorganic composition obtained after carrying out the third step, into a predetermined shape using a conventionally known method.
Therefore, the inorganic composition before carrying out the first step or the inorganic composition obtained after carrying out the third step would be produced into various shapes such as a plate shape, a container shape, a wire shape, an irregular shape, and the like.

(2) Film thinning step

Furthermore, the inorganic composition obtained after carrying out the third step has excellent mechanical strength, toughness, and the like per predetermined thickness.
Therefore, it is preferable to carry out a film thinning step and making a plate, container, or the like having a thickness of 0.01 to 20 mm into a thinner plate, container, or the like by using, for example, a chemical mechanical polishing apparatus (CMP apparatus), a cutting apparatus, or the like.
That is, since predetermined mechanical strength, toughness, and the like are obtained even with a glass composition having a small thickness as such, the glass composition would contribute to thickness reduction of a liquid crystal display device, an organic EL display device, and the like, which utilize the glass composition.

(3) Lamination step

Furthermore, it is preferable that a predetermined lamination step is carried out, and a predetermined resin base material, a metal plate, a metal foil, or the like is laminated on the inorganic composition before carrying out the first step or the inorganic composition obtained after carrying out the third step.

When a predetermined lamination step is carried out as such, a multi-functional inorganic composition would be easily obtained.

[Third embodiment]

A third embodiment of the present invention is a method for producing the inorganic composition of the first embodiment and is a method for producing an inorganic composition, which includes the following step A and step B (second production method):

step A: a step of disposing the inorganic composition at a predetermined place in a heating furnace equipped with a photon irradiation apparatus; and
step B: a step of heating the inorganic composition to 150°C to 1,000°C, and at the same time, irradiating the inorganic composition with photons to implant photons into the inorganic composition.

1. Step A

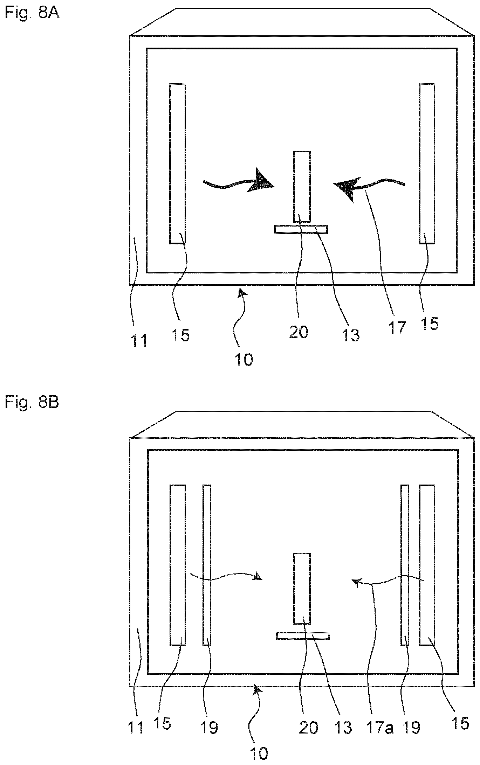

Step A is a step of preparing a heating furnace 10 equipped with a photon irradiation apparatus 15 shown in Fig. 8A and disposing an inorganic composition at a predetermined place therein.

Regarding the photon irradiation apparatus used in such step A, at least one of a xenon lamp, an ultraviolet lamp, a halogen lamp, a near-infrared lamp, an LED (Light-Emitting Diode), or a laser would be used.

Furthermore, an apparatus equipped with a filament formed from Kanthal, graphite, or the like would also be used as a photon irradiation apparatus.

Incidentally, each of the above-described light sources and the like may be used in combination as necessary, and a light collecting means such as a lens may be used in addition. It is preferable that the shape, power output, number, and the like of the photon irradiation apparatus are changed according to the size, shape, and the like of the glass composition, which is an object of treatment.

Furthermore, the heating furnace used in such step A would be configured to include an electric furnace, a lamp heating furnace, a treatment furnace having a high-temperature heating element filament, for example, a treatment furnace equipped with a Kanthal heating element, or the like.

In such a heating furnace, the above-described photon irradiation apparatus is provided at a position and a number according to the size and shape of the object to be treated. Furthermore, it is suitable to provide a stage for placing the object to be treated, at a site inside the heating furnace, where high photon implantation efficiency into the object to be treated is obtained.

Incidentally, although not shown in the diagram, it is preferable that the heating furnace has a sensor for detecting the temperature inside the furnace, a control unit capable of controlling the temperature inside the furnace and setting the temperature profile, and the like.

2. Step B

Step B is a step of heating the inorganic composition to a value within the range of 150°C to 1,000°C and at the same time, irradiating the inorganic composition with photons to implant photons into the inorganic composition.

That is, the object to be treated (inorganic composition) placed at a predetermined place in the heating furnace as shown in Fig. 8A is heated for a predetermined time at a temperature in a predetermined range appropriate for treating the inorganic composition.

Regarding the temperature and time appropriate for treating the inorganic composition and the temperature profile, it is preferable that the temperature, time, and profile appropriate for adjusting the fluorescence intensity as specified in the present invention are to be grasped in advance through experiments and the like for the glass composition.

Furthermore, the reason for setting the temperature range to a value within the range of 150°C to 1,000°C for the present treatment is that the fluorescence intensity of the inorganic composition of the present embodiment as measured by a fluorescence intensity analysis method is easily adjusted to be within a desired range.

Furthermore, from the viewpoint that a reinforcement treatment would be carried out more efficiently, when the object of reinforcement treatment is a glass composition containing soda lime glass, borosilicate glass, or the like among the inorganic compositions, it is preferable that the temperature range of the inorganic composition in the present treatment is set to a value within the range of the softening point of the inorganic composition or lower.

Therefore, regarding the heating temperature of the inorganic composition, it is more preferable that the inorganic composition is heated to a value within the range of 200°C to 700°C, which is a temperature equal to or lower than the softening point, and it is even more preferable that the inorganic composition is heated to a value within the range of 250°C to 600°C.

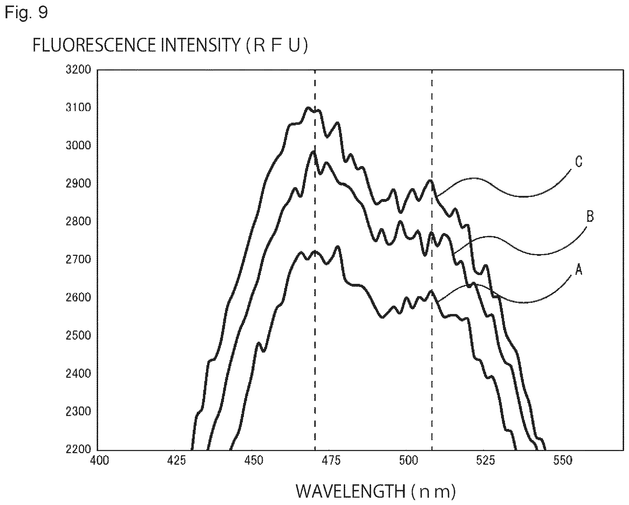

Here, the relationship between the fluorescence intensity (RFU) of the inorganic composition and the heating temperature for the inorganic composition during the present treatment will be described with reference to Fig. 9.

That is, in Fig. 9, the values of fluorescence intensity (RFU) obtained at a wavelength of 400 to 600 nm based on JIS K 0120 when three sheets of soda lime glass plates produced under the same conditions were each subjected to the present treatment under different conditions and then excited by light having a wavelength of 204 nm, are adopted and shown.

Curve A corresponds to a case where the heating temperature as a treatment condition was set to 500°C, curve B corresponds to a case where the heating temperature as a treatment condition was set to 200°C ouldd curve C corresponds to a case where a heating treatment was not carried out.

As understood from these curves A, B, and C, it is understood that by controlling the heating treatment temperature in the present treatment step, the fluorescence intensity measured by a fluorescence intensity analysis method would be stably and accurately adjusted to a value within a suitable range.

Furthermore, it would be understood that as compared to the case where the heating treatment was not carried out, the present treatment step associated with heating would effectively adjust the fluorescence intensity of the inorganic composition as measured by a fluorescence intensity analysis method.

Furthermore, Step B is also a step of implanting photons into the inorganic composition.

Accordingly, as mentioned above, it is preferable to use at least one photon irradiation apparatus of a xenon lamp, an ultraviolet lamp, a halogen lamp, a near-infrared lamp, an LED, a laser, or the like; however, in that case, it is preferable that the wavelength of the light to be irradiated (ultraviolet radiation, near-infrared radiation, infrared radiation, or the like) is set to a value within the range of 0.4 to 5 $\mu$m.

The reason for this is that when such a wavelength has a value of below 0.4 $\mu$m, excessive energy is applied, it is difficult to adjust the fluorescence intensity measured by a fluorescence intensity analysis method, and the resulting flexural strength and impact strength may not be stabilized.

3. Other steps

For the method for producing an inorganic composition of the third embodiment as well, steps such as a molding step, a film thinning step, and a lamination step may be separately added, similarly to the method for producing an inorganic composition of the second embodiment.

EXAMPLES

Hereinafter, the present invention will be described in more detail using Examples.

However, the present invention is not intended to be limited to the following description of Examples without particular reason.

[Example 1]

1. Preparation of inorganic composition

A plurality of sheets each of a borosilicate glass plate (in Table 1, described as sample type A) having a thickness of 1.1 mm, a width of 10 mm, and a length of 50 mm as a sample 20; a soda lime glass plate (in Table 1, described as sample type B) having a thickness of 1.1 mm, a width of 10 mm, and a length of 50 mm as a sample 20'; and a ceramic plate (in Table 1, described as sample type C) having a thickness of 1.1 mm, a width of 10 mm, and a length of 50 mm as a sample 20'', were prepared.

The sample 20" had a content of $SiO_2$ of 70% by weight and a content of $Al_2O_3$ of 10% by weight with respect to the total amount.

2. Strengthening treatment of inorganic composition

(1) Strengthening treatment apparatus preparation step

Next, as shown in Fig. 8A, a heating furnace having an internal space and equipped with a housing 11 having heat insulation properties, a stage 13, and a photon irradiation apparatus 15 was prepared as the heating furnace 10. The stage 13 is provided at a predetermined position in the internal space of the housing 11. Furthermore, the photon irradiation apparatus 15 is disposed in a predetermined manner so as to surround the stage 13.

In this Example, the heating furnace 10 includes a halogen lamp manufactured by Fintech Co., Ltd. as the photon irradiation apparatus 15. More particularly, it is a line-shaped halogen lamp having a length of 250 mm and has specifications of 200 V and 5 KW.

Therefore, photons and heat (in Fig. 8A, indicated by numeral 17) reach from the photon irradiation apparatus 15 toward the sample 20, sample 20', and sample 20".

(2) Strengthening treatment step

Next, the prepared sample 20, sample 20', and sample 20" were placed on the stage 13 in the heating furnace 10, the output power of the halogen lamp was controlled such that the temperature of such samples was 480°C, the samples were heated for 10 minutes at that temperature, and irradiation with halogen lamp light (wavelength: 0.8 $\mu$m) was simultaneously carried out.

The visible light transmittance and the softening point of the sample 20 were measured before and after the strengthening treatment step, which were 90% or higher and 600°C or higher, respectively, and no significant difference was observed.

In addition, the visible light transmittance and softening point of the sample 20' were measured before and after the strengthening treatment step, which were 92% or higher and 600°C or higher, respectively, and no significant difference was observed.

3. Evaluation of inorganic composition

(1) Measurement of fluorescence intensity 1

Each of the samples after the strengthening treatment of Example 1 was irradiated with light having a wavelength of 204 nm as excitation light, and the fluorescence intensity at a wavelength of 470 nm was measured in the obtained fluorescence spectrum by using a spectrophotofluorometer (manufactured by JASCO Corp.). The obtained results are shown in Table 1 as fluorescence intensity 1.

(2) Measurement of fluorescence intensity 2

Each of the samples after the strengthening treatment of Example 1 was irradiated with light having a wavelength of 204 nm as excitation light, and the fluorescence intensity at a wavelength of 510 nm was measured in the obtained fluorescence spectrum by using a spectrophotofluorometer (manufactured by JASCO Corp.). The obtained results are shown in Table 1 as fluorescence intensity 2.

(3) Measurement of pore radius by positron annihilation lifetime method

The pore radius of each of the samples after the strengthening treatment of Example 1 as measured by a positron annihilation lifetime method was measured using a positron lifetime measurement system (manufactured by Toyo Seiko Co., Ltd.). The obtained results are shown in Table 1.

Furthermore, the measurement results for the pore radius in each sample and the relationship between flexural strength and impact strength are shown in Figs. 3A and 3B, respectively.

(4) Flexural strength according to four-point bending test method

For each of the samples after the strengthening treatment of Example 1, the flexural strength (MPa) was measured using a four-point bending test method based on JIS R 1601. The obtained results are shown in Table 1.

Incidentally, as shown in Fig. 4, the four-point bending test method is a test of bending a sample by applying two loads 33 of the same size at equidistant positions from fulcrums 31a and 31b set on the right and left sides with respect to the object of evaluation.

Furthermore, the relationship between the results of the bending test for each sample and the results and the fluorescence intensity measured by a fluorescence intensity analysis method are shown in Figs. 1A and 1B.

(5) Vickers hardness test

Each of the samples after the strengthening treatment of Example 1 was subjected to the Vickers hardness test based on JIS Z 2244 to measure the Vickers hardness, and this was evaluated according to the following criteria. The obtained results are shown in Table 1.

    ⊙ (Very Good) : The Vickers hardness is 12 Hv or greater.
    ○ (Good) : The Vickers hardness is 8 Hv or greater.
    △ (Fair) : The Vickers hardness is 4 Hv or greater.
    ✕ (Bad) : The Vickers hardness is below 4 Hv.

Incidentally, Figs. 5A and 5B show photographic observation of the shapes of indentations 45 and 45a, and the presence or absence of the generation of cracks when impact was applied to the sample 20 after the strengthening treatment at a load of 4.9 N and a load of 9.8 N, respectively.

(6) Impact strength

Each of the samples after the strengthening treatment of Example 1 was subjected to an impact test by an impact tester (manufactured by AGR International, Inc.) to measure the impact strength. The obtained results are shown in Table 1.

Furthermore, Figs. 2A and 2B show the relationship between the impact strength obtained in the impact test for each sample and the fluorescence intensity of the inorganic composition measured by a fluorescence intensity analysis method.

Fig. 6B is an enlarged view (50 times) of an impact mark after performing cumulative impacting for a number of times (25 times) on the sample 20 after the strengthening treatment of Example 1 shown in Fig. 6A.

[Example 2]

In Example 2, as a heating furnace equipped with a photon irradiation apparatus, a tabletop muffle furnace (KDF P100 manufactured by Denken-Highdental Co., Ltd.), which is a tabletop muffle furnace (not shown in the diagram) provided with a heating element filament (Kanthal AF) in the furnace, was prepared as the strengthening treatment apparatus.

Next, a sample 20, a sample 20', and a sample 20", which were similar to those of Example 1, were prepared, and as a strengthening treatment, the samples were placed at the center of the tabletop muffle furnace, the temperature of the samples was adjusted to 500°C by means of a heating element filament, and then irradiation by means of the heating element filament was continued for about 3 hours.

Subsequently, the samples were cooled to near normal temperature for 2 to 3 hours, and then the fluorescence intensity and the like were respectively measured and evaluated in the same manner as in Example 1. The obtained results are shown in Table 1.

Incidentally, in Example 2, the visible light transmittance and the softening point of the sample 20 were also measured before and after the strengthening treatment step, which were 90% or higher and 600°C or higher, respectively, and no significant difference was observed.

In addition, the visible light transmittance and softening point of the sample 20' were measured before and after the strengthening treatment step, which were 92% or higher and 600°C or higher, respectively, and no significant difference was observed.

[Example 3]

In Example 3, an ion implantation apparatus (manufactured by Sumitomo Heavy Industries, Ltd., SHX-III/S) was prepared as the strengthening treatment apparatus.

Furthermore, a sample 20, a sample 20', and a sample 20", which were similar to those of Example 1, were prepared, and as a strengthening treatment, the sample 20, sample 20', and sample 20" were subjected to ion implantation under the following conditions, and then the fluorescence intensity and the like were respectively measured and evaluated in the same manner as in Example 1. The obtained results are shown in Table 1.

Incidentally, in Example 3, the visible light transmittance and the softening point of the sample 20 were also measured before and after the strengthening treatment step, which were 90% or higher and 600°C or higher, respectively, and no significant difference was observed.

In addition, the visible light transmittance and softening point of the sample 20' were measured before and after the strengthening treatment step, which were 92% or higher and 600°C or higher, respectively, and no significant difference was observed.

Ion generating gas: Ar
Gas flow rate: 100 sccm
Duty ratio: 0.5%
Applied voltage: 100 kV
Chamber internal pressure: 0.005 Pa
Pulse width: 5 μsec
Treatment time (ion implantation time): 5 seconds

[Comparative Example 1]

In Comparative Example 1, a heating furnace 10 similar to that of Example 1 was prepared as the strengthening treatment apparatus, and as shown in Fig. 8B, a shielding plate 19 made of silicon was installed between the photon irradiation apparatus 15 and the stage 13 in the internal space of the heating furnace 10.

Other than that, a sample 20, a sample 20', and a sample 20", which were similar to those of Example 1, were prepared and subjected to a strengthening treatment under the same conditions as in Example 1, and then the fluorescence intensity and the like were measured and evaluated in the same manner as in Example 1. The obtained results are shown in Table 1.

Incidentally, the shielding plate 19 made of silicon has a property of transmitting infrared radiation having a wavelength of 1.1 μm or greater but not transmitting light having a wavelength shorter than 1.1 μm.

[Comparative Example 2]

In Comparative Example 2, a sample 20, a sample 20', and a sample 20", which were similar to those of Example 1, were prepared, and the sample 20, sample 20', and sample 20" were evaluated without performing a strengthening treatment. The obtained results are shown in Table 1.

Incidentally, Figs. 5C and 5D are the results obtained by observing indentations 41 and 41a and cracks 43 and 43a when a load of 1.9 N and a load of 4.9 N were applied to the sample 20 obtained in Comparative Example 2.

[Table 1]

| | Sample type | Fluorescence intensity 1 (RFU) | Fluorescence intensity 2 (RFU) | Pore radius (nm) | Flexural strength (MPa) | Vickers hardness (HV) | Impact strength (kJ/m$^2$) |
|---|---|---|---|---|---|---|---|
| Example 1 | A | 2689.5 | 2587.1 | 0.1698 | 410 | ⊙ | 1.312 |
| | B | 2658.9 | 2545.2 | 0.1620 | 445 | ⊙ | 1.385 |
| | C | 2728.9 | 2590.1 | 0.1710 | 351 | ○ | 0.933 |
| Example 2 | A | 2911.2 | 2681.4 | 0.1748 | 365 | ○ | 1.220 |
| | B | 2844.2 | 2701.1 | 0.1685 | 398 | ○ | 1.355 |
| | C | 2848.4 | 2661.2 | 0.1755 | 344 | ○ | 0.921 |
| Example 3 | A | 2983.0 | 2791.9 | 0.1780 | 315 | ○ | 1.130 |
| | B | 2993.2 | 2793.2 | 0.1759 | 331 | ○ | 1.195 |
| | C | 2944.2 | 2768.3 | 0.1791 | 310 | ○ | 0.891 |
| Comparative Example 1 | A | 3058.6 | 2844.9 | 0.1829 | 246 | △ | 0.691 |
| | B | 3071.5 | 2846.5 | 0.1815 | 298 | × | 0.852 |
| | C | 3018.7 | 2818.9 | 0.1832 | 229 | × | 0.531 |

(continued)

|  | Sample type | Fluorescence intensity 1 (RFU) | Fluorescence intensity 2 (RFU) | Pore radius (nm) | Flexural strength (MPa) | Vickers hardness (HV) | Impact strength (kJ/m$^2$) |
|---|---|---|---|---|---|---|---|
| Comparative Example 2 | A | 3103.2 | 2858.6 | 0.1840 | 212 | × | 0.511 |
|  | B | 3133.3 | 2895.4 | 0.1833 | 267 | × | 0.411 |
|  | C | 3063.2 | 2844.9 | 0.1840 | 144 | × | 0.266 |

INDUSTRIAL APPLICABILITY

As described above, according to the present invention, attention was paid to the fluorescence intensity measured by a fluorescence intensity analysis method, and as a result, there would be provided an inorganic composition containing at least one selected from glass or a non-glass-based ceramic, the inorganic composition having excellent mechanical strength and excellent toughness, which is considered as a contradictory characteristic, as compared with conventional inorganic compositions, the inorganic composition enabling easy inspection during production and also exhibiting excellent productivity.

Furthermore, according to the method for producing an inorganic composition of the present invention, an inorganic composition having the fluorescence intensity adjusted to a predetermined value would be produced stably and easily, without performing a liquid treatment or a high-pressure treatment.

In addition, the inorganic composition would be processed into any of various shapes, including glass containers, while maintaining the characteristics such as light transmittance and softening point (including the melting point and the like) of conventional inorganic compositions of soda lime glass and the like, and furthermore, the mechanical strength, toughness, and the like of the inorganic composition would be enhanced to desired ranges.

Accordingly, since the present invention would be widely applied to soda lime glass, borosilicate glass, and non-glass-based ceramics, which are all widely used at present, it is expected that utilization thereof is expanded in and contributes to a wide range of use applications such as industrial and consumer glass products, for example, optical glass for displays, protective glass, glass containers for cosmetics, sheet glass for windowpane, sheet glass for automobiles, floor tiles, and tableware.

**Claims**

1. An inorganic composition comprising at least one selected from glass or a non-glass-based ceramic,

   wherein the flexural strength measured by a four-point bending test method based on JIS R 1601 is set to a value of 300 MPa or greater, and
   the fluorescence intensity at a wavelength within the range of 260 to 600 nm as measured by a fluorescence intensity analysis method based on JIS K 0120 when the inorganic composition is excited by light at a wavelength having a value within the range of 180 to 250 nm, is set to a value of 3,000 RFU or less.

2. The inorganic composition according to claim 1, wherein the pore radius measured by a positron annihilation lifetime method is set to a value of 0.181 nm or less.

3. The inorganic composition according to claim 1 or 2, wherein the Vickers hardness measured based on JIS Z 2244 is set to a value of 4 Hv or greater.

4. The inorganic composition according to any one of claims 1 to 3, wherein the impact strength measured by an impact test apparatus is set to a value of 0.8 kJ/m$^2$ or more.

5. The inorganic composition according to any one of claims 1 to 4, wherein the inorganic composition has a flat plate-shaped portion, and the thickness of the flat plate-shaped portion is set to a value within the range of 0.01 to 20 mm.

6. A method for producing the inorganic composition according to claim 1, the method comprising the following first step to third step:

first step: a step of disposing the inorganic composition at a predetermined place in a treatment chamber of an ion implantation apparatus performing an ion implantation method;

second step: a step of reducing the internal pressure of the ion implantation apparatus to a value within the range of 0.0001 to 0.017 Pa; and

third step: a step of implanting ions into the inorganic composition.

7. A method for producing the inorganic composition according to claim 1, the method comprising the following step A and step B:

step A: a step of disposing the inorganic composition at a predetermined place in a heating furnace equipped with a photon irradiation apparatus; and

step B: a step of heating the inorganic composition to 150°C to 1,000°C and at the same time, irradiating the inorganic composition with photons to implant photons.

Fig. 1A

4-POINT BENDING GLASS STRENGTH (M p a)

EXCITATION WAVELENGTH 204 nm

B (SODA LIME GLASS)

A (BOROSILICATE GLASS)

C (CERAMIC)

FLUORESCENCE INTENSITY AT WAVELENGTH OF 470 nm ( R F U )

Fig. 1B

4-POINT BENDING GLASS STRENGTH (M p a)

EXCITATION WAVELENGTH 204 nm

B (SODA LIME GLASS)

A (BOROSILICATE GLASS)

C (CERAMIC)

FLUORESCENCE INTENSITY AT WAVELENGTH OF 510 nm ( R F U )

Fig. 2A

Fig. 2B

Fig. 3A

Fig. 3B

Fig. 4

Fig. 5A

Fig. 5B

Fig. 5C

Fig. 5D

Fig. 6A

51

51a

Fig. 6B

53    51a

51

Fig. 7

EP 4 005 992 A1

Fig. 8A

11  15      10      20  13  17  15

Fig. 8B

11  15  19      10      20  13  17a  19  15

29

Fig. 9

FLUORESCENCE INTENSITY ( R F U )

WAVELENGTH ( n m )

# EP 4 005 992 A1

<table>
<tr><td colspan="2" style="text-align:center"><b>INTERNATIONAL SEARCH REPORT</b></td><td>International application No.<br>PCT/JP2020/032192</td></tr>
</table>

**A. CLASSIFICATION OF SUBJECT MATTER**
C03C 21/00(2006.01)i; C03C 3/091(2006.01)i; G01N 3/20(2006.01)i; G01N 3/30(2006.01)i; G01N 3/42(2006.01)i; G01N 23/2255(2018.01)i
FI: C03C21/00 Z; C03C3/091; G01N3/20; G01N3/30 N; G01N3/42 B; G01N23/2255
According to International Patent Classification (IPC) or to both national classification and IPC

**B. FIELDS SEARCHED**

Minimum documentation searched (classification system followed by classification symbols)
C03C21/00; C03C3/091; G01N3/20; G01N3/30; G01N3/42; G01N23/2255

Documentation searched other than minimum documentation to the extent that such documents are included in the fields searched
| | |
|---|---|
| Published examined utility model applications of Japan | 1922–1996 |
| Published unexamined utility model applications of Japan | 1971–2020 |
| Registered utility model specifications of Japan | 1996–2020 |
| Published registered utility model applications of Japan | 1994–2020 |

Electronic data base consulted during the international search (name of data base and, where practicable, search terms used)
JSTPlus (JDreamIII); JST7580 (JDreamIII); JSTChina (JDreamIII)

**C. DOCUMENTS CONSIDERED TO BE RELEVANT**

| Category* | Citation of document, with indication, where appropriate, of the relevant passages | Relevant to claim No. |
|---|---|---|
| X<br>A | JP 2010-001183 A (NARUMI CORPORATION) 07 January 2010 (2010-01-07) examples 1-2, tables 1, 3, paragraphs [0030]-[0050] | 1-6<br>7 |
| X<br>A | JP 60-239378 A (TOYOTA CENTRAL R&D LABS., INC.) 28 November 1985 (1985-11-28) page 2, upper left column, line 12 to page 3, upper right column, line 7, example 4, table 1 | 1-3<br>7 |
| X<br>A | JP 61-072697 A (TOYOTA CENTRAL R&D LABS., INC.) 14 April 1986 (1986-04-14) page 2, upper left column, line 16 to page 3, upper right column, line 14, examples 1, 3, tables 1, 3 | 1-6<br>7 |
| X<br>A | JP 2009-234856 A (HOYA CORPORATION) 15 October 2009 (2009-10-15) examples 1, 3, table 1 | 1-5, 7<br>6 |

☐ Further documents are listed in the continuation of Box C.  ☒ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search<br>06 October 2020 (06.10.2020) | Date of mailing of the international search report<br>27 October 2020 (27.10.2020) |
|---|---|
| Name and mailing address of the ISA/<br>Japan Patent Office<br>3-4-3, Kasumigaseki, Chiyoda-ku,<br>Tokyo 100-8915, Japan | Authorized officer<br><br>Telephone No. |

Form PCT/ISA/210 (second sheet) (January 2015)

| INTERNATIONAL SEARCH REPORT | International application No. |
| --- | --- |
| Information on patent family members | PCT/JP2020/032192 |

| Patent Documents referred in the Report | Publication Date | Patent Family | Publication Date |
| --- | --- | --- | --- |
| JP 2010-001183 A | 07 Jan. 2010 | (Family: none) | |
| JP 60-239378 A | 28 Nov. 1985 | (Family: none) | |
| JP 61-072697 A | 14 Apr. 1986 | (Family: none) | |
| JP 2009-234856 A | 15 Oct. 2009 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2018188335 A
- JP 2017529305 A

- JP 6372011 B